# EUROPEAN PATENT APPLICATION

(11) **EP 4 678 494 A1**
(43) Date of publication of application: **14.01.2026**
(21) Application number: 25315250.8
(22) Date of filing: 11.07.2025
(51) Int. Cl.: B60W 40/00, B60W 40/08, B60W 40/10, B60W 50/14

(54) **METHOD FOR ESTIMATING THE DRIVING COMFORT OF A VEHICLE**

(30) Priority: 12.07.2024 IT 202400016249
(71) Applicant: IVECO FRANCE S.A.S., 69200 Vénissieux (FR)
(72) Inventor: Lopes Da Silva, Thomas, 69200 VENISSIEUX (FR)
(74) Representative: Studio Torta S.p.A.

(57) **Abstract**

A computer-implemented method is provided for estimating the driving comfort of a vehicle (3). The method comprises: receiving motion data representing one or more quantities acquired by a detection system (10) of the vehicle during driving of the vehicle, the one or more quantities being indicative of at least one of a vertical acceleration (Aᵥₑᵣ), a lateral acceleration (Aₗₐᵣ) and a longitudinal acceleration (Aₗₒₙ) of the vehicle during driving; and estimating the driving comfort of the vehicle, based on the motion data.

## Description

### CROSS-REFERENCE TO RELATED APPLICATIONS

This patent application claims priority from Italian patent application no. 102024000016249 filed on July 12, 2024, the entire disclosure of which is incorporated herein by reference.

### TECHNICAL FIELD

The present invention relates to a method for estimating the driving comfort of a vehicle; in particular, the comfort of the passengers of the vehicle.

The present invention finds its preferred, although not exclusive, application to a road vehicle for transport of passengers, in particular a road public transportation means such as for example a bus.

### BACKGROUND OF THE INVENTION

As is known, the driving style of a driver affects greatly the driving comfort experienced by the passengers of the vehicle during driving.

The comfort is also greatly affected by the conditions of the road on which the vehicle is travelling.

This comfort issue is particularly relevant when the vehicle is a public transportation means.

Therefore, the need is felt to evaluate and monitor the driving comfort of the passengers of a vehicle. This may allow the comfort of the passengers to be kept high during the whole trip.

An aim of the present invention is to satisfy at least in part the above-mentioned need, in a cost-effective and optimized manner.

### SUMMARY OF THE INVENTION

The aforementioned aim is reached by a method, a vehicle and a computer program, as claimed in the appended set of claims that are integral part of the present description.

### BRIEF DESCRIPTION OF DRAWINGS

For a better understanding of the present invention, embodiments are described in the following, by way of nonlimiting examples, with reference to the attached drawings wherein:
- Figure 1 is a block diagram of a system comprising a vehicle, according to an embodiment of the present invention;
- Figures 2A and 2B show schematic and exemplificative representations of the vehicle of Figure 1 during driving;
- Figure 3 is a flowchart of a method for estimating a comfort of the passengers of the vehicle of Figure 1; according to an embodiment; and
- Figure 4 shows an example of a graphical interface of the vehicle of Figure 1, in use.

### DETAILED DESCRIPTION OF THE INVENTION

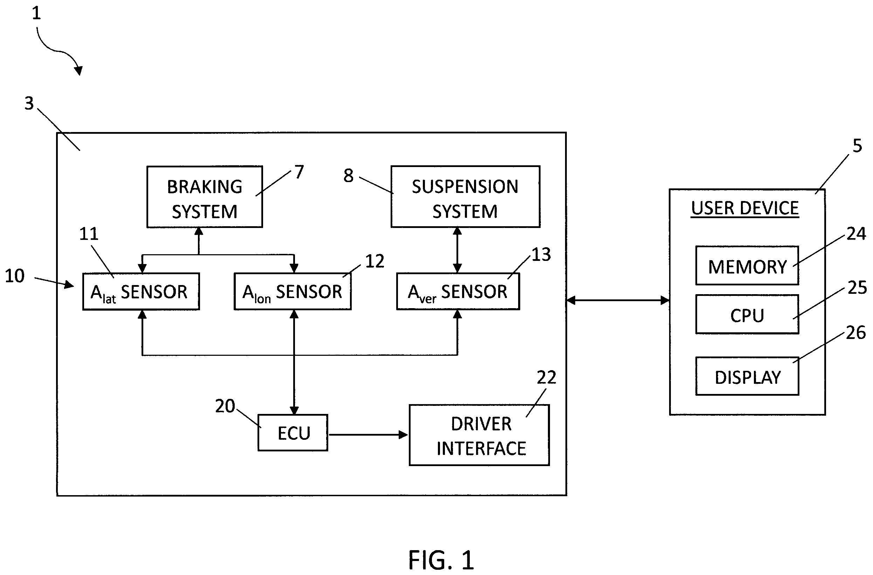

Figure 1 shows a block diagram of a system 1 comprising a vehicle 3 and a user device 5, electronically couplable with each other for the mutual exchange of data.

For example, the vehicle 3 and the user device 5 may be connectable with each other through a wireless connection, for example through RF signals such as Bluetooth, Wi-Fi, cellular network etc., or a wired connection, for example during a maintenance of the vehicle 3.

The vehicle 3 may be a land vehicle, in particular a road vehicle, i.e., a vehicle configured to drive over a road surface.

The vehicle 3 may be a vehicle for transporting one or more passengers, i.e. persons other than the driver of the vehicle.

Preferably, the vehicle 3 is a public transportation means, such as for example a bus.

Preferably, the vehicle 3 is a wheeled vehicle comprising a plurality of wheels.

In detail, the vehicle 3 comprises a braking system 7, which is configured to brake the vehicle 3, and a suspension system 8, which is configured to couple in a movable manner the body (chassis) of the vehicle 3 with the axle/wheels of the vehicle 3 in order to reduce/dampen the vibrations transmitted therebetween.

The suspension system 8 may be for example mechanical, pneumatic, hydraulic or of other known types. Just for sake of example, the suspension system 8 may comprise one or more elastic elements, for example air bellows or springs, coupling a respective wheel of the vehicle 3 or an axle with the body of the vehicle 3.

The vehicle 3 further comprises a detection system 10 that is configured to acquire, during driving of the vehicle 3, one or more quantities that are indicative of (that is, quantities that depend on) at least one acceleration undergone by the vehicle 3 during driving.

In detail, in the embodiment of Figure 1, the detection system 10 comprises a longitudinal sensor 11, which is configured to detect quantities indicative of a longitudinal acceleration Aₗₒₙ of the vehicle 3 during driving; a lateral sensor 12, which is configured to detect quantities indicative of a lateral acceleration Aₗₐₜ of the vehicle 3 during driving; and a vertical sensor 13, which is configured to detect quantities indicative of a vertical acceleration Aᵥₑᵣ of the vehicle 3 during driving.

In this disclosure, the term acceleration is used indistinctively to indicate both positive and negative values of acceleration, unless otherwise specified. In other words, the term acceleration is used indistinctively to indicate both accelerations and decelerations of the vehicle 3.

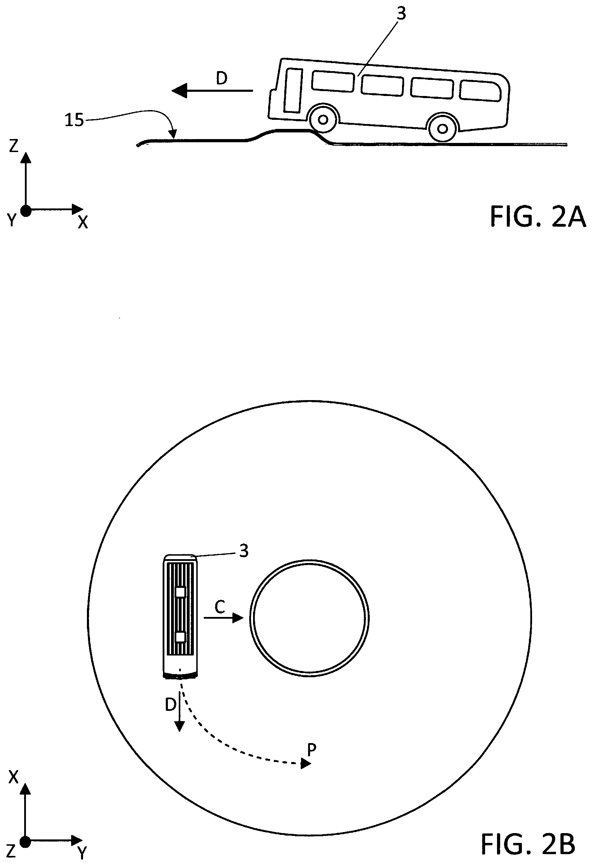

The longitudinal acceleration Aₗₒₙ is the acceleration (or deceleration) undergone by the vehicle 3 along a driving direction of the vehicle 3, for example parallel to a straight direction D in case the vehicle 3 moves along a straight path (parallel to axis X in Figure 2A) or, if the vehicle 3 is moving along a curved path P (Figure 2B), along a direction T that is tangential to the curved path P (and parallel to axis X in the example of Figure 2B).

The longitudinal sensor 11 is configured to acquire one or more quantities indicative of the longitudinal acceleration Aₗₒₙ and provide, in response, longitudinal motion data representing the detected quantities.

In practice, the longitudinal motion data is indicative of the longitudinal acceleration Aₗₒₙ of the vehicle 3 during driving.

For example, the longitudinal sensor 11 may be an accelerometer that is configured to sense the longitudinal acceleration Aₗₒₙ directly, or a different kind of sensor configured to sense other quantities that are associated to the functioning of the vehicle 3 and that depend on the longitudinal acceleration Aₗₒₙ of the vehicle 3, such as velocity of the vehicle 3, position and/or movement of one or more acceleration and/or braking means of the vehicle 3 (for example an acceleration pedal or a braking pedal of the vehicle 3).

In the embodiment of Figure 1, the longitudinal sensor 11 is coupled to the braking system 7. In particular, the longitudinal sensor 11 may be an accelerometer of the braking system 7, for example an accelerometer of an EBS ("Electronic Braking System") group of the braking system 7.

The lateral acceleration Aₗₐₜ is the acceleration undergone by the vehicle 3 when the vehicle 3 moves along a curved path (e.g., path P of Figure 2B).

The lateral acceleration Aₗₐₜ is transversal to the driving direction.

In particular, with reference to the example of Figure 2B, the lateral acceleration Aₗₐₜ may be parallel to a radial direction C that is perpendicular to the tangential direction T (and parallel to axis Y in the example of Figure 2B).

The lateral sensor 12 is configured to acquire one or more quantities indicative of the lateral acceleration Aₗₐₜ and provide, in response, lateral motion data representing the detected quantities.

In practice, the lateral motion data is indicative of the lateral acceleration Aₗₐₜ of the vehicle 3 during driving.

For example, the lateral sensor 12 may be an accelerometer that is configured to sense the lateral acceleration Aₗₐₜ directly, or a different kind of sensor configured to sense other quantities that are associated to the functioning of the vehicle 3 and that depend on the lateral acceleration Aₗₐₜ of the vehicle 3, such as velocity of the vehicle 3, position and/or movement of one or more of acceleration means (e.g., an acceleration pedal), braking means (e.g., a braking pedal) and steering means (e.g., a steering wheel) of the vehicle 3.

In the embodiment of Figure 1, the lateral sensor 12 is coupled to the braking system 7. In particular, the lateral sensor 12 may be an accelerometer of the braking system 7, for example an accelerometer of an EBS group of the braking system 7.

The vertical acceleration Aᵥₑᵣ is the acceleration undergone by the vehicle 3 along a vertical direction, e.g., parallel to axis Z in the example of Figures 2A and 2B, that is transversal, in particular perpendicular, to a road surface, which is indicated by 15 in the example of Figure 2A, on which the vehicle 3 is driving.

With reference to the examples of Figures 2A and 2B, the vertical direction may be transversal, in particular perpendicular, to both the driving direction D and the radial direction C.

The vertical sensor 13 is configured to acquire one or more quantities indicative of the vertical acceleration Aᵥₑᵣ and provide, in response, vertical motion data representing the detected quantities.

In practice, the vertical motion data is indicative of the vertical acceleration Aᵥₑᵣ of the vehicle 3 during driving.

For example, the vertical sensor 13 may be an accelerometer that is configured to sense the vertical acceleration Aᵥₑᵣ directly, or a different kind of sensor configured to sense other quantities that are associated to the functioning of the vehicle 3 and that depend on the vertical acceleration Aᵥₑᵣ of the vehicle 3.

Preferably, as shown in the embodiment of Figure 1, the vertical sensor 13 may be coupled to the suspension system 8 and acquire the respective quantities from the suspension system 8. In other words, the vertical sensor 13 may be a virtual acceleration sensor which measures the vertical acceleration of the vehicle 3 indirectly, by detecting quantities indicative of a functioning of the suspension system 8.

For example, the vertical sensor 13 may be configured to sense any one or more of the following quantities of the suspensions of the suspension system 8: air bellow pressure, suspension deflection, etc.

In particular, the vertical sensor 13 may be configured to acquire both a quantity that is representative of the compression of an elastic element of the suspension system 8, in particular the air bellow pressure, and a quantity that is representative of a movement of the suspensions of the suspension system 8, in particular suspension deflections.

The detection unit 10 may be further configured to acquire other quantities indicative of the driving of the vehicle 3.

The detection unit 10 may further comprises sensing means, for example a steering wheel sensor, configured to acquire quantities indicative of the steering of the vehicle 3.

The detection unit 10 may further comprises sensing means, for example a brake pedal sensor, configured to acquire quantities indicative of a braking force applied by the braking system 7 for braking the vehicle 3.

The detection unit 10 may further comprises sensing means, for example a speed sensor, configured to acquire quantities indicative of a speed, in particular a longitudinal speed, of the vehicle 3.

The vehicle 3 further comprises an electronic control unit 20 that is coupled to the detection system 10.

In detail, the electronic control unit 20 is configured to receive the lateral motion data, the longitudinal motion data and the vertical motion data from the respective sensors 11-13.

In this embodiment, the electronic control unit 20 processes the lateral motion data, the longitudinal motion data and the vertical motion data in order to estimate a driving comfort of the vehicle 3, in particular the comfort of the one or more passengers of the vehicle 3, as discussed in detail hereinafter.

The vehicle 3 further comprises a driver interface 22 that is coupled to the electronic control unit 20 and is configured to provide information signals or data to a driver of the vehicle 3.

For example, the driver interface 22 may comprise a dashboard, for example having one or more displays, configured for displaying driving information during driving of the vehicle 3.

The user device 5 is an electronic device external to the vehicle 3, for example a personal electronic device of a driver of the vehicle 3 or an external device such as a server, laptop, computer, smartphone, etc. of a different user of the vehicle 3 (such as for example an owner or manager of the vehicle 3).

The user device 5 comprises an electronic processing unit having one or more memories 24 and one or more processors 25.

The user device 5 may further comprise a user output interface, in particular a screen or display 26.

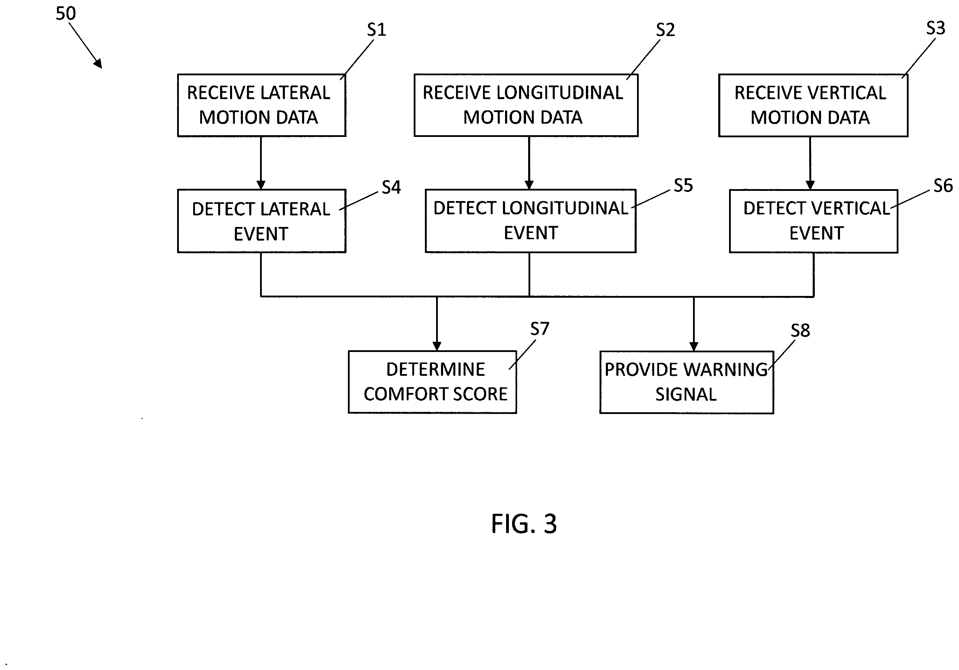

Figure 3 shows the flowchart of a method 50 for estimating a driving comfort of the vehicle 3, according to an embodiment.

In particular, the driving comfort may be the comfort of one or more passengers of the vehicle 3 or, in other words, the comfort experienced by the passengers because of the driving style of the vehicle 3.

In this embodiment, the method 50 is performed by the electronic control unit 20. However, the method 50 may be performed by different electronic processing resources, for example integrated in the vehicle 3 or external to the vehicle 3, such as the user device 5.

At a step S1, the electronic control unit 20 receives the lateral motion data indicative of the lateral acceleration Aₗₐₜ undergone by the vehicle 3 during a driving.

In particular, the lateral motion data represents the respective quantities acquired by the lateral sensor 11 during a driving window.

The lateral motion data may be received directly from the lateral sensor 11. In alternative, the lateral motion data provided by the lateral sensor 11 may undergo further conditioning or processing steps before being received by the electronic control unit 20.

The electronic control unit 20 may receive the lateral motion data from the lateral sensor 11 in real time or at fixed or variable update times, depending on the specific application and configuration.

At a step S2, the electronic control unit 20 receives the longitudinal motion data indicative of the longitudinal acceleration Aₗₒₙ undergone by the vehicle 3 during driving.

In particular, the longitudinal motion data represents the respective quantities acquired by the longitudinal sensor 12 during a driving window.

The longitudinal motion data may be received directly from the longitudinal sensor 12. In alternative, the longitudinal motion data provided by the longitudinal sensor 12 may undergo further conditioning or processing steps before being received by the electronic control unit 20.

The electronic control unit 20 may receive the longitudinal motion data from the longitudinal sensor 12 in real time or at fixed or variable update times, depending on the specific application and configuration.

At a step S3, the electronic control unit 20 receives the vertical motion data indicative of the vertical acceleration Aᵥₑᵣ undergone by the vehicle 3 during driving.

In particular, the vertical motion data represents the respective quantities acquired by the vertical sensor 13 during a driving window.

The vertical motion data may be received directly from the vertical sensor 13. In alternative, the vertical motion data provided by the vertical sensor 13 may undergo further conditioning or processing steps before being received by the electronic control unit 20.

The electronic control unit 20 may receive the vertical motion data from the vertical sensor 13 in real time or at fixed or variable update times, depending on the specific application and configuration.

Then, the electronic control unit 20 estimates the driving comfort based on the longitudinal, lateral and/or vertical motion data.

In detail, at a step S4, the electronic control unit 20 detects the occurrence of one or more events in the lateral motion data.

According to an embodiment, the detection of an event in the lateral motion data may comprise comparing the lateral motion data with one or more lateral-comfort thresholds.

The lateral-comfort thresholds are indicative of lateral acceleration thresholds such as specific values of lateral acceleration or variations of the lateral acceleration.

In particular, the electronic control unit 20 may determine one or more lateral jerk values of the vehicle 3 from the lateral motion data. In this case, the lateral-comfort thresholds may be indicative of jerk thresholds.

The lateral-comfort thresholds may be chosen during a calibration or initialization step, depending on the specific application, for example depending on the specific model of the vehicle 3.

According to an embodiment, the event detection of step S4 may be based also on the steering of the vehicle 3, in order to detect only events in the lateral motion data that are associated to a maneuver, in particular a steering maneuver, performed by the driver of the vehicle 3 and thus associated to the driving style of the driver. In detail, the electronic control unit 20 may verify if steering data indicative of a steering of the vehicle 3, for example a steering angle of a steering wheel, is higher than a steering threshold.

In practice, an event in the lateral motion data may be detected based on the lateral motion data and the steering data, in particular if the steering data indicates that steering of the vehicle is higher than the steering threshold.

The lateral-comfort thresholds and the steering threshold may be stored in the electronic control unit 20.

Preferably, the lateral-comfort thresholds and/or the steering threshold stored in the electronic control unit 20 may be updated remotely, for example through the user device 5 or another dedicated device or app, such as an engineering portal; in this way, the method may be easily customized depending on the specific vehicle.

At a step S5, the electronic control unit 20 detects the occurrence of one or more events in the longitudinal motion data.

According to an embodiment, the detection of an event in the longitudinal motion data may comprise comparing the longitudinal motion data with one or more longitudinal-comfort thresholds.

The longitudinal-comfort thresholds are indicative of longitudinal acceleration thresholds such as specific values of longitudinal acceleration or variations of the longitudinal acceleration.

In particular, the electronic control unit 20 may determine one or more longitudinal jerk values of the vehicle 3 from the longitudinal motion data. In this case, the longitudinal-comfort thresholds may be indicative of jerk thresholds.

The longitudinal-comfort thresholds may be chosen during a calibration or initialization step, depending on the specific application, for example depending on the specific model of the vehicle 3.

According to an embodiment, the event detection of step S5 may be based also on the current braking force applied by the braking system 7, in order to detect only events in the longitudinal motion data that are associated to a maneuver, in particular a braking maneuver, performed by the driver of the vehicle 3 and thus associated to the driving style of the driver. In detail, the electronic control unit 20 may verify if braking data indicative of the braking force of the vehicle 3, for example a pressing level of a brake pedal of the vehicle 3, is higher than a braking threshold.

In practice, an event in the longitudinal motion data may be detected based on the longitudinal motion data and the braking data, in particular if the braking data indicates that the braking force is higher than the braking threshold.

The longitudinal-comfort thresholds and the braking threshold may be stored in the electronic control unit 20.

Preferably, the longitudinal-comfort thresholds and/or the braking threshold stored in the electronic control unit 20 may be updated remotely, for example through the user device 5 or another dedicated device or app, such as an engineering portal; in this way, the method may be easily customized depending on the specific vehicle.

At a step S6, the electronic control unit 20 detects the occurrence of one or more events in the vertical motion data.

According to an embodiment, the detection of an event in the vertical motion data may comprise comparing the vertical motion data with one or more vertical-comfort thresholds.

The vertical-comfort thresholds are indicative of vertical acceleration thresholds such as specific values of vertical acceleration or variations of the vertical acceleration.

In particular, the electronic control unit 20 may determine one or more vertical jerk values of the vehicle 3 from the vertical motion data. In this case, the vertical-comfort thresholds may be indicative of jerk thresholds.

The vertical-comfort thresholds may be chosen during a calibration or initialization step, depending on the specific application, for example depending on the specific model of the vehicle 3.

According to an embodiment, the event detection of step S6 may be based also on the current speed of the vehicle 3, in particular the longitudinal speed of the vehicle 3, in order to detect only events in the vertical motion data that are associated to a maneuver performed by the driver of the vehicle 3 and thus associated to the driving style of the driver. In detail, the electronic control unit 20 may verify if speed data indicative of the speed of the vehicle 3, for example as detected by a speed sensor of the vehicle 3, is higher than a speed threshold.

In practice, an event in the vertical motion data may be detected based on the vertical motion data and the speed data, in particular if the speed data indicates that the vehicle is higher than the speed threshold.

The vertical-comfort thresholds and/or the speed threshold may be stored in the electronic control unit 20.

Preferably, the vertical-comfort thresholds and/or the speed threshold stored in the electronic control unit 20 may be updated remotely, for example through the user device 5 or another dedicated device or app, such as an engineering portal; in this way, the method may be easily customized depending on the specific vehicle.

The event detection based on threshold comparison may be easy to implement and may use a low amount of processing resources, thereby obtaining a simple and efficient comfort estimation.

At a step S7, the electronic control unit 20 determines, in response to the detection of any one or more of the events discussed with reference to steps S4 to S6, a comfort score that is indicative of the comfort experienced by the passengers of the vehicle 3 during driving.

For example, the electronic control unit 20 may update a current value of the comfort score based on the detected events in the motion data.

For example, during initialization or configuration of the vehicle 3, such as before or during a first use or test of the vehicle 3, the comfort score may be set to an initial value.

For example, the initial value may indicate a maximum value of the comfort score, e.g. equal to 100.

According to an embodiment, when an event is detected in the respective motion data, the current comfort score may be updated by decreasing the current comfort score.

For example, the electronic control unit 20 may determine a lateral comfort score in response to the detection of an event in the lateral motion data, a longitudinal comfort score in response to the detection of an event in the longitudinal motion data, and a vertical comfort score in response to the detection of an event in the vertical motion data. In this case, the electronic control unit 20 may further determine an overall comfort score based on the lateral comfort score, longitudinal comfort score and vertical comfort score.

For example, determining the overall comfort score may comprise averaging the lateral comfort score, longitudinal comfort score and vertical comfort score. The averaging may be performed by using different averaging weights for the lateral comfort score, longitudinal comfort score and vertical comfort score.

The averaging weights may defined by calibration and may be stored in the electronic control unit 20.

Preferably, the averaging weights may be updated remotely, for example through the user device 5 or another dedicated device or app, such as an engineering portal; in this way, the method may be easily customized depending on the specific vehicle.

For example, the fact that the lateral motion data overcomes a lateral-comfort threshold indicates that the vehicle 3 has undergone a lateral acceleration higher than the respective comfort threshold, thereby implying that the passengers have experienced, during driving, a lateral acceleration that is too high. Accordingly, the estimated comfort score of the passengers should be reduced.

The reduction of the comfort score may depend on the specific event or threshold that has been detected at any of the steps S4 to S6, depending on the specific configuration and application.

According to an embodiment, the comfort score may be determined at step S7 based on the number of events that has been detected at any of steps S4 to S6.

In particular, the electronic control unit 20 may be configured to count the number of events detected from motion data that has been acquired over a respective driving window.

The driving window may be based on a driving time of the vehicle 3 and/or on a distance travelled by the vehicle 3.

For example, the electronic control unit 20 may count the number of events detected in the lateral motion data, longitudinal motion data and/or vertical motion data that have been acquired over an amount of kilometers travelled by the vehicle 3 and/or during a specific time window of driving time (e.g., during one or more days or during one or more weeks).

Number of events, thresholds, distance travelled and time windows may be tuned independently for steps S4, S5 and S6, depending on the specific application.

Preferably, any one or more of number of events, thresholds, distance travelled and time windows may be updated remotely, for example through the user device 5 or another dedicated device or app, such as an engineering portal; in this way, the method may be easily customized depending on the specific vehicle.

The step S7 of determining the comfort score may further comprise to provide a comfort signal indicative the updated comfort score to a user of the vehicle 3. For example, the comfort signal may be indicative of the lateral comfort score, the longitudinal comfort score, the vertical comfort score and/or the overall comfort score.

The comfort score may be provided to the driver of the vehicle 3, for example through the interface 22. In this case the comfort signal may be a visual indicator of the updated or current comfort score. This may allow the driver of the vehicle 3 to correct their driving style, thereby improving the driving comfort.

In addition or in alternative, the comfort score may be provided to the user device 5. In this case the user device 5 receives the comfort signal and may be configured to store the comfort score and/or provide the comfort score to another operator, for example through the display 26. This may allow to monitor the driving comfort of the vehicle 3 over the life of the vehicle 3.

The comfort estimation of method 50 may further comprise a step S8 wherein a warning signal is provided to the driver of the vehicle 3, in response to any one or more of the events of steps S4 to S6 being detected.

In particular, a warning signal may be provided every time that one of the comfort thresholds is overcome.

In this case, the steps S1 to S6 are performed by the electronic control unit 20 during driving of the vehicle 3, so that the driver may be alerted in real time while driving the vehicle 3 and thus correct the driving style. Steps S7 and/or S8 may also be performed by the electronic control unit 20 during driving.

The electronic control unit 20 may control the driver interface 22 so that the driver interface 22 provides the warning signal to the driver.

Preferably, the warning signal is a visual indicator or icon shown on a screen of the interface 22, for example on a screen of the dashboard of the vehicle 3.

Preferably, the warning signal may depend on the specific event that has been detected.

For example, the warning signal may comprise a first signal that indicates when an event is detected in the lateral motion data, in particular when the lateral motion data indicates that the lateral acceleration Aₗₐₜ has overcome a respective threshold; and/or a second signal that indicates when an event is detected in the longitudinal motion data, in particular when the longitudinal motion data indicates that the longitudinal acceleration Aₗₒₙ has overcome a respective threshold; and/or a third signal that indicates when an event is detected in the vertical motion data, in particular when the vertical motion data indicates that the vertical acceleration Aᵥₑᵣ has overcome a respective threshold.

The first signal, the second signal and the third signal may be different with each other. By doing so, the driver may know that an event that can cause a discomfort in the passengers has been detected and, in response, may correct their driving style so as to keep the passengers comfort high.

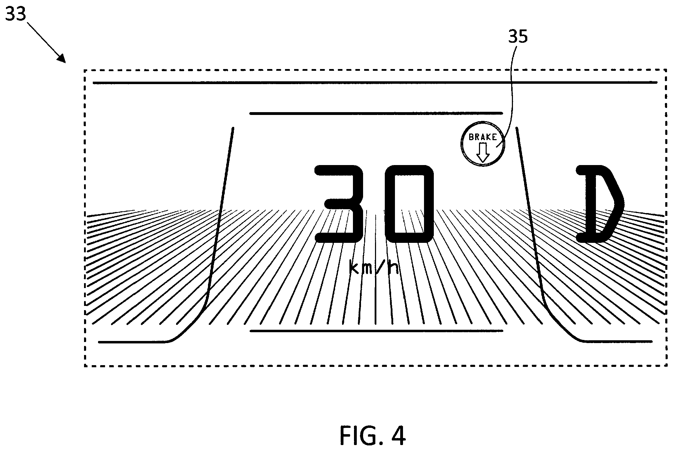

By way of example only, Figure 4 shows an exemplificative dashboard 33 of the driver interface 22, during driving of the vehicle 3. The dashboard 33 comprises an example of the warning signal, here a visual indicator 35, which indicates that an event has been detected from the longitudinal motion data, in particular in this example that the vehicle 3 has undergone a high deceleration (harsh braking).

In practice, embodiments of a driving comfort estimation step have been described with reference the steps S4 to S8.

The use of motion data that is indicative of the acceleration undergone by the vehicle 3 during driving allows to estimate the driving comfort of the vehicle 3 and in particular of the passengers during driving.

The fact that the vertical motion data may be indicative of quantities of the suspension system 8 allows to obtain a robust estimation of the comfort caused by vertical accelerations of the vehicle 3 and by the driving style of the driver. In fact, the suspension system 8 dampens the vertical oscillations of the vehicle 3 caused by the conditions of the road (for example when travelling on gravels or paved roads). By doing so, the vertical motion data may depend mostly on the driving style of the driver and not being affected, at least as a first approximation, by the road conditions.

It is clear that modifications can be made to the described system and method without departing from the scope of the invention, as defined by the appended claims.

The estimation of the comfort of the passengers may be based on a different processing of the motion data with respect to what discussed with reference to Figure 3.

For example, the comfort estimation may not be based on the comparison of the motion data with one or more thresholds. For example, the comfort estimation may be based on peak finding in the motion data or on different data processing algorithms.

For example, the lateral, vertical and/or longitudinal motion data may be received by the specific processing resources from a database or memory wherein they have been previously stored.

Any one or more of the steps of method 50 may be performed by electronic processing resources other than the electronic control unit 20. For example, electronic processing resources external to the vehicle 3, such as the user device 5, may be configured to receive the motion data acquired during driving and estimate the comfort of the passengers based on the motion data.

For example, the comfort evaluation according to the present invention may be based on any one or more of the longitudinal motion data, lateral motion data and vertical motion data.

## Claims

1. A computer-implemented method for estimating the driving comfort of a vehicle (3), the method comprising:
- receiving (S1-S3) motion data representing one or more quantities acquired by a detection system (10) of the vehicle during driving of the vehicle, the one or more quantities being indicative of at least one of a vertical acceleration (Aᵥₑᵣ), a lateral acceleration (Aₗₐₜ) and a longitudinal acceleration (Aₗₒₙ) of the vehicle during driving; and
- estimating (S4-S8) the driving comfort of the vehicle, based on the motion data.

2. The method according to claim 1, wherein the motion data comprises first data representing first quantities acquired by the detection system and indicative of a vertical acceleration of the vehicle during driving.

3. The method according to the preceding claim, wherein the first quantities are acquired, by the detection system, from a suspension system (8) of the vehicle during driving.

4. The method according to any of the preceding claims, wherein the motion data comprises second data representing second quantities acquired by the detection system and indicative of a lateral acceleration of the vehicle during driving.

5. The method according to any of the preceding claims, wherein the motion data comprises third data representing third quantities acquired by the detection system and indicative of a longitudinal acceleration of the vehicle during driving.

6. The method according to claim 4 or 5, wherein the second quantities and/or the third quantities are acquired, by the detection system, from a braking system (7) of the vehicle.

7. The method according to any of the preceding claims, wherein estimating the driving comfort comprises determining at least one of vertical jerk, lateral jerk and longitudinal jerk of the vehicle (3) from the motion data, the driving comfort being estimated based on the at least one jerk.

8. The method according to any of the preceding claims, wherein estimating the driving comfort comprises detecting one or more events in the motion data based on the comparison of the motion data with one or more comfort thresholds, the one or more comfort thresholds being for example indicative of acceleration or acceleration-variation thresholds.

9. The method according to any of the preceding claims, wherein estimating the driving comfort comprises detecting a number of events in the motion data, each event being indicative of the at least one acceleration (Aₗₐₜ, Aₗₒₙ, Aᵥₑᵣ) being higher than one or more comfort thresholds, the at least one acceleration being for example indicative of acceleration-variation thresholds, the driving comfort being estimated based on the number of events.

10. The method according to claim 8 or 9, wherein detecting events in the motion data is performed during driving of the vehicle, the method further comprising providing, during driving and to a driver of the vehicle, a warning signal, in response to the detection of one of the events.

11. The method according to any of claims 8 to 10, wherein detecting events comprises detecting a respective event for each of the at least one acceleration, for example one of a vertical motion event, a lateral motion event and a longitudinal motion event,
the method further comprising providing one of a plurality of different warning signals, based on which respective event has been detected.

12. The method according to any one of claims 8-11,
wherein detecting an event for the lateral acceleration further comprises verifying, based on steering data representing one or more quantities acquired by a detection system (10) during driving of the vehicle and indicative of a steering angle of the vehicle, if the event for the lateral acceleration is associated to a maneuver of a driver of the vehicle; and/or
wherein detecting an event for the longitudinal acceleration further comprises verifying, based on braking data representing one or more quantities acquired by a detection system (10) during driving of the vehicle and indicative of a braking force of the vehicle, if the event for the longitudinal acceleration is associated to a maneuver of a driver of the vehicle; and/or
wherein detecting an event for the vertical acceleration further comprises verifying, based on speed data representing one or more quantities acquired by the detection system (10) during driving of the vehicle and indicative of a speed of the vehicle, if the event for the vertical acceleration is associated to a maneuver of a driver of the vehicle.

13. The method according to any of the preceding claims, further comprising providing a signal indicative of the estimated driving comfort to a user of the vehicle.

14. The method according to any of the preceding claims, wherein estimating the driving comfort comprises determining a comfort score indicative of the estimated driving comfort.

15. A computer program comprising instructions that, when executed by electronic processing resources, cause the electronic processing resources to:
- receive motion data representing one or more quantities acquired by a detection system (10) during driving of a vehicle (3), the one or more quantities being indicative of at least one of a vertical acceleration (Aᵥₑᵣ), a lateral acceleration (Aₗₐₜ) and a longitudinal acceleration (Aₗₒₙ) of the vehicle during driving; and
- estimate a driving comfort of the vehicle based on the motion data.

16. A data processing apparatus (20, 5) comprising means for carrying out the method of any of claims 1-13.

17. A vehicle (3), in particular a road vehicle, comprising:
- a detection system (10) configured to acquire, during driving of the vehicle, one or more quantities indicative of at least one of a vertical acceleration (Aᵥₑᵣ), a lateral acceleration (Aₗₐₜ) and a longitudinal acceleration (Aₗₒₙ) of the vehicle; and
- electronic processing resources (20) configured to receive motion data representing the one or more quantities acquired by the detection system and to estimate the driving comfort of the vehicle based on the motion data.
